(19) Europäisches Patentamt
European Patent Office
Office européen des brevets

(11) EP 2 613 379 A1

(12) **EUROPEAN PATENT APPLICATION**
published in accordance with Art. 153(4) EPC

(43) Date of publication:
**10.07.2013 Bulletin 2013/28**

(21) Application number: **11821260.4**

(22) Date of filing: **08.08.2011**

(51) Int Cl.:
*H01M 2/20* (2006.01)     *H01M 2/10* (2006.01)

(86) International application number:
**PCT/JP2011/004486**

(87) International publication number:
**WO 2012/029235 (08.03.2012 Gazette 2012/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2010 JP 2010193442**

(71) Applicant: **Panasonic Corporation Osaka 571-8501 (JP)**

(72) Inventors:
• **KOBAYASHI, Yoshiaki**
  **Osaka-shi**
  **Osaka 540-6207 (JP)**
• **GESHI, Shinya**
  **Osaka-shi**
  **Osaka 540-6207 (JP)**

(74) Representative: **Grünecker, Kinkeldey, Stockmair & Schwanhäusser Leopoldstrasse 4 80802 München (DE)**

(54) **ASSEMBLED BATTERY**

(57)     An assembled battery includes unit batteries and a connecting member. Each of the unit batteries includes negative and positive electrode terminals. The connecting member has thin portions, and a thick portion that is a rest other than the thin portions. The thin portions are welded to the respective positive electrode terminals or the respective negative electrode terminals. When the connecting member is connected to the positive elec-trode terminals of the unit batteries, an area of each of the thin portions is equal to or more than an area of the connecting surface of each of the positive electrode terminals. When the connecting member is connected to the negative electrode terminals, an area of each of the thin portions is equal to or more than an area of the connecting surface of each of the negative electrode terminals.

FIG. 2

**Description**

**TECHNICAL FIELD**

The present invention relates to an assembled battery in which unit batteries are electrically connected in parallel using connecting members.

**BACKGROUND ART**

An assembled battery, which is configured by connecting secondary batteries, has been widely used as mobile power sources of, for example, portable electronic apparatuses, electric vehicles, or the like. When secondary batteries are connected in parallel, positive electrode terminals of the batteries are connected to each other by a positive electrode connecting member, and negative electrode terminals of the batteries are connected to each other by a negative electrode connecting member (see, for example, Patent Literature 1).

When the number of secondary batteries is increased, a large electric current flows in a connecting member. When a flat-shaped connecting member is used and when the connecting member is relatively thin, electric resistance of the connecting member is large, and a voltage drop in the connecting member is also large. As a result, a large electric power cannot be taken out, or heat is generated in the connecting member so as to increase a temperature of the battery, thus causing the lifetime of the unit batteries to be reduced. In particular, in the connecting member, electric currents from a large number of the secondary batteries are more concentrated nearer to the connecting portion of the assembled battery to be connected to an external terminal, and the effect by the heat generation due to electrification becomes large.

In order to solve such a problem, if the connecting member is made thick, when negative electrode terminals and positive electrode terminals of the unit batteries and a connecting member are welded to each other, sufficient bond strength cannot be obtained.

Citation List

Patent Literature 1: Japanese Patent Application Unexamined Publication No. 2004-31192

**SUMMARY OF THE INVENTION**

The present invention provides an assembled battery from which large electric power can be taken out, which is capable of reducing a decrease of the lifetime of unit batteries, and sufficiently securing bond strength when the unit batteries and a connecting member are welded to each other.

The assembled battery of the present invention includes unit batteries and a connecting member. Each of the unit batteries includes a negative electrode terminal and a positive electrode terminal. The connecting member has a plurality of thin portions and a thick portion that is a rest of the connecting member other than the thin portions. Each of the thin portions is welded to each of the positive electrode terminals or each of the negative electrode terminals. When the connecting member is connected to each of the positive electrode terminals of the unit batteries, an area of each of the thin portions is equal to or more than an area of a connecting surface of each of the positive electrode terminals. When the connecting member is connected to each of the negative electrode terminals, an area of each of the thin portions is equal to or more than an area of a connecting surface of each of the negative electrode terminals.

By welding the thin portion of the connecting member to the negative electrode terminal or the positive electrode terminal, bond strength between the connecting member and the unit batteries can be sufficiently secured. Furthermore, as electric current flows in the thick portion of the connecting member, electrical resistance of the connecting member can be suppressed to relatively small. Therefore, a voltage drop in the connecting member can be suppressed to small, and output can be increased when the assembled battery is charged and discharged with a large electric current. Furthermore, heat generation of the connecting member can be reduced, and the lifetime of the unit batteries can be improved. Furthermore, since the area of each of the thin portions is equal to or more than an area of the connecting surface of the positive electrode terminal and/or the connecting surface of the negative electrode terminal, electrical resistance between the unit batteries and the connecting member can be reduced.

**BRIEF DESCRIPTION OF THE DRAWINGS**

Fig. 1 is a sectional view of a unit battery used in an assembled battery in accordance with a first exemplary embodiment of the present invention.

Fig. 2 is a perspective view of the assembled battery in accordance with the first exemplary embodiment of the present invention.

Fig. 3 is a sectional view taken on line 3-3 of the assembled battery shown in Fig. 2.

Fig. 4 is a top view of the assembled battery shown in Fig. 2.

Fig. 5 is an enlarged view of a principal part of another assembled battery in accordance with the first exemplary embodiment of the present invention.

Fig. 6 is a sectional view of an assembled battery in accordance with a second exemplary embodiment of the present invention.

Fig. 7 is an enlarged view of a principal part of another assembled battery in accordance with the second exemplary embodiment of the present invention.

Fig. 8 is a sectional view of an assembled battery in accordance with a third exemplary embodiment of the present invention.

## DETAILED DESCRIPTION OF THE PREFERRED EMBODIMENTS

Hereinafter, exemplary embodiments of the present invention are described with reference to drawings. Note here that the present invention is not limited to the exemplary embodiments. Furthermore, in each exemplary embodiment, the same reference numerals are given to the same configurations as in the preceding exemplary embodiments, and detailed description may be omitted.

## (FIRST EXEMPLARY EMBODIMENT)

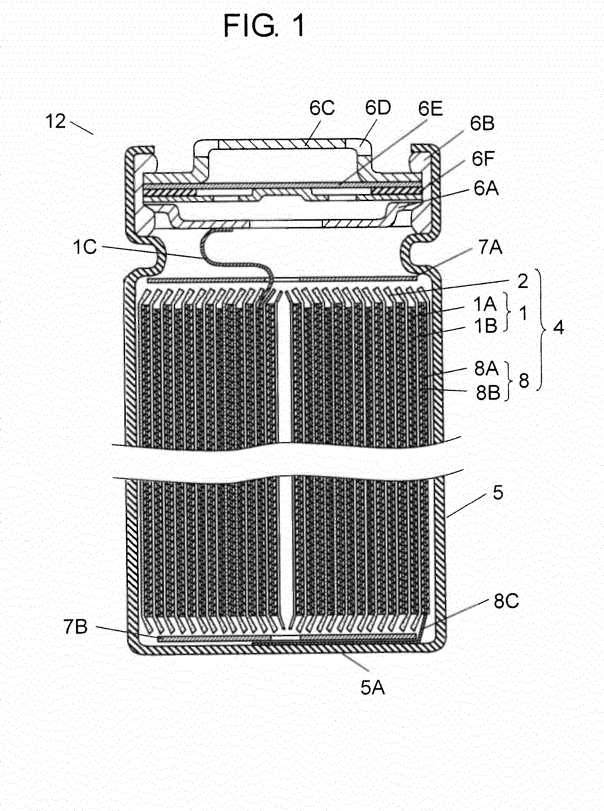

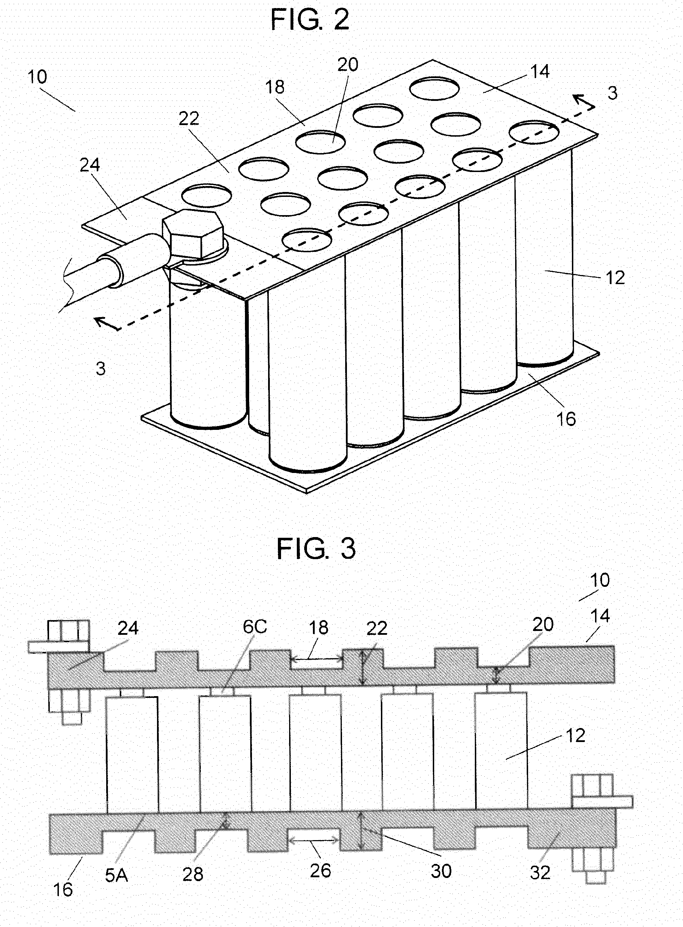

Fig. 1 is a sectional view of unit battery 12 used in assembled battery 10 in accordance with the first exemplary embodiment of the present invention. Fig. 2 is a perspective view of assembled battery 10. Fig. 3 is a sectional view taken on line 3-3 of assembled battery 10.

Firstly, with reference to Fig. 1, a configuration of unit battery 12 is described. Unit battery 12 includes electrode group 4. Electrode group 4 is formed by winding positive electrode 1 and negative electrode 8 that faces positive electrode 1 via separator 2. Lead 1C made of, for example, aluminum (Al) is connected to positive electrode 1, and lead 8C made of, for example, copper is connected to negative electrode 8.

Electrode group 4 is inserted into case 5 in a state in which insulating plates 7A and 7B are placed on the upper and lower surfaces of electrode group 4. An end portion of lead 1C is welded to sealing plate 6A, and an end portion of lead 8C is welded to an inner bottom part of case 5, respectively. Furthermore, non-aqueous electrolyte (not shown) that conducts lithium ions is filled into case 5. That is to say, the non-aqueous electrolyte, with which electrode group 4 is impregnated, is interposed between positive electrode 1 and negative electrode 8.

An open end of case 5 is caulked with respect to positive electrode terminal 6C, current breaking member 6F such as a PTC element and sealing plate 6A via gasket 6B. Positive electrode terminal 6C is provided with exhaust hole 6D for exhausting gas released when vent mechanism 6E such as a safety valve is opened due to failure of electrode group 4.

Positive electrode 1 includes current collector 1A and positive electrode layer 1B containing positive electrode active material. Positive electrode layer 1B includes lithium-containing composite oxide such as, for example, $LiCoO_2$, $LiNiO_2$, $Li_2MnO_4$, or a mixture or a composite compound thereof, as positive electrode active material. Positive electrode layer 1B further includes a conductive agent and a binding agent. As the conductive agent, for example, graphites such as natural graphites and artificial graphites, or carbon blacks such as acetylene black, Ketjen black, channel black, furnace black, lampblack, thermal black, and the like, can be used. Furthermore, as the binding agent, for example, polyvinylidene fluoride, polytetrafluoroethylene, polyethylene, polypropylene, aramid resin, polyamide, polyimide, and the like, can be used. As current collector 1A, Al, carbon, conductive resin, and the like, can be used.

As the non-aqueous electrolyte, an electrolyte solution obtained by dissolving a solute in an organic solvent, or a so-called a polymer electrolyte obtained by immobilizing such a solution with a polymer can be used. Examples of the solute of the non-aqueous electrolyte may include $LiPF_6$, $LiBF_4$, $LiClO_4$, $LiAlCl_4$, $LiSbF_6$, $LiSCN$, $LiCF_3SO_3$, $LiN(CF_3CO_2)$, $LiN(CF_3SO_2)_2$, and the like. Examples of the organic solvent may include ethylene carbonate, propylene carbonate, butylene carbonate, vinylene carbonate, dimethyl carbonate, diethyl carbonate, ethyl methyl carbonate, and the like.

Negative electrode 8 includes current collector 8A and negative electrode layer 8B containing negative electrode active material. As current collector 8A, a metal foil of, for example, stainless steel, nickel, copper, and titanium, a thin film of carbon and conductive resin, and the like, is used. As negative electrode active material contained in negative electrode layer 8B, carbon material such as graphite can be used. Alternatively, materials such as silicon and tin and oxide thereof, which is capable of reversibly absorbing and releasing lithium ions and having theoretical capacity density of more than 833 $mAh/cm^3$, can be used. As mentioned above, since lead 8C is connected to the inner bottom surface of case 5, the outer bottom surface of case 5 functions as negative electrode terminal 5A.

Next, a configuration of assembled battery 10 is described. As shown in Figs. 2 and 3, assembled battery 10 includes a plurality of (14 in the example shown in the drawings) unit batteries 12, positive electrode connecting member 14 and negative electrode connecting member 16. Positive electrode connecting member 14 is connected to positive electrode terminals 6C of all unit batteries 12. Negative electrode connecting member 16 is connected to negative electrode terminals 5A of all unit batteries 12. Positive electrode connecting member 14 and negative electrode connecting member 16 are separated from each other. That is to say, all unit batteries 12 are connected in parallel to each other by positive electrode connecting member 14 and negative electrode connecting member 16.

Positive electrode connecting member 14 is a good conductor such as elementary metal or an alloy including at least one of copper, aluminum, nickel, silver, and gold. The outer shape of positive electrode connecting member 14 is not particularly limited, and Fig. 2 shows an example of positive electrode connecting member 14 having a substantially rectangular contour.

Positive electrode connecting member 14 has a flat shape on a surface of a side connected to unit batteries 12, and is provided with a plurality of recesses 18 on a surface of an opposite side to the side to which unit batteries 12 are connected. Recesses 18 are provided in the same number as that of unit batteries 12 to be disposed. Recesses 18 are formed by subjecting a flat-shaped good conductor to press processing, cutting processing or etching. The shape of each of recesses 18 is, for example, a circular shape. Consequently, positive electrode connecting member 14 has thin portions 20 and thick portion 22 that is a rest other than thin portions 20.

The thickness of each of thin portions 20 is set such that positive electrode terminal 6C of unit battery 12 can be welded to thin portion 20 by laser welding or resistance welding. Thin portions 20 are mounted on respective positive electrode terminals 6C of unit batteries 12, and positive electrode terminal 6C and thin portion 20 are welded to each other by laser welding or resistance welding, and electrically connected to each other.

Furthermore, positive electrode connecting member 14 includes connecting section 24 to be connected to an external terminal (not shown) in the vicinity of an end portion of the long side of positive electrode connecting member 14.

Similar to positive electrode connecting member 14, negative electrode connecting member 16 is made of a good conductor including at least one of aluminum, nickel, silver, and gold. The outer shape of negative electrode connecting member 16 is not particularly limited, and Fig. 2 shows an example of negative electrode connecting member 16 having substantially a rectangular contour.

Negative electrode connecting member 16 has a flat shape on a surface of a side connected to unit batteries 12, and has a plurality of recesses 26 on a surface of an opposite side to the side to which unit batteries 12 are connected. Recesses 26 are disposed in the same number as that of unit batteries 12 to be disposed in assembled battery 10. Recesses 26 are formed by subjecting a flat-shaped good conductor to press processing, cutting processing or etching. The shape of each of recesses 26 is, for example, a circular shape. Consequently, negative electrode connecting member 16 includes thin portions 28 and thick portion 30 that is a rest other than thin portions 28.

The thickness of each of thin portions 28 is set such that negative electrode terminal 5A of unit battery 12 can be welded to thin portion 28 by laser welding or resistance welding. Unit batteries 12 are mounted on respective thin portions 28 of negative electrode connecting member 16, and negative electrode terminal 5A of unit battery 12 and thin portion 28 are welded to each other by laser welding or resistance welding, and electrically connected to each other.

Furthermore, negative electrode connecting member 16 includes connecting section 32 to be connected to an external terminal (not shown) in the vicinity of an end portion of the long side of negative electrode connecting member 16. In Figs. 2 and 3, connecting section 32 is formed on the end portion located at the opposite side to connecting section 24, but arrangement of connecting section 32 is not necessarily limited to this.

In this exemplary embodiment, the capacity of unit battery 12 is 2,900 mAh, the thicknesses of thin portions 20 and 28 are 0.1 mm or more and 0.3 mm or less, and the thicknesses of thick portions 22 and 30 are 0.5 mm or more and 2.5 mm or less.

Hereinafter, an operation and effect of assembled battery 10 configured as mentioned above are described.

When the number of batteries 12 is increased, a large electric current flows in positive electrode connecting member 14 and negative electrode connecting member 16. Meanwhile, average sectional areas of positive electrode connecting member 14 and negative electrode connecting member 16 are relatively large by thick portion 22 of positive electrode connecting member 14 and thick portion 30 of negative electrode connecting member 16. As a result, it is possible to suppress resistance of positive electrode connecting member 14 and negative electrode connecting member 16 to relatively small. Therefore, even when unit batteries 12 are charged and discharged with a large electric current, a voltage drop in positive electrode connecting member 14 and negative electrode connecting member 16 can be suppressed to small, and the output of assembled battery 10 can be increased. Furthermore, heat generation in positive electrode connecting member 14 and negative electrode connecting member 16 can be reduced, and the lifetime of unit batteries 12 can be improved.

On the other hand, thick portion 22 of positive electrode connecting member 14 and thick portion 30 of negative electrode connecting member 16 are formed to have a large thickness. That is to say, thick portion 22 does not have a thickness suitable to be welded to positive electrode terminal 6C by laser welding or resistance welding. Similarly, thick portion 30 does not have a thickness suitable to be welded to negative electrode terminal 5A. However, thin portions 20 and 28 are set to a thickness that can be welded to positive electrode terminal 6C and negative electrode terminal 5A, respectively, by laser welding or resistance welding. Therefore, positive electrode terminals 6C and positive electrode connecting member 14 as well as negative electrode terminals 5A and negative electrode connecting member 16 can be welded to each other by laser welding or resistance welding, respectively. Thus, sufficient bond strength can be secured.

As mentioned above, negative electrode connecting member 16 is formed by subjecting a flat-shaped good conductor to press processing, cutting processing or etching. However, it is difficult to form thin portion 28, which is a portion that has been subjected to press processing, cutting processing or etching, in a flat shape. However, a surface of a side of negative electrode connecting member 16 connected to unit batteries 12 is not subjected to press processing, cutting processing or etching, and therefore, the surface is formed in a flat shape.

Moreover, since thick portion 22 forms an outermost surface of assembled battery 10, the height of assembled battery 10 can be made to be uniform.

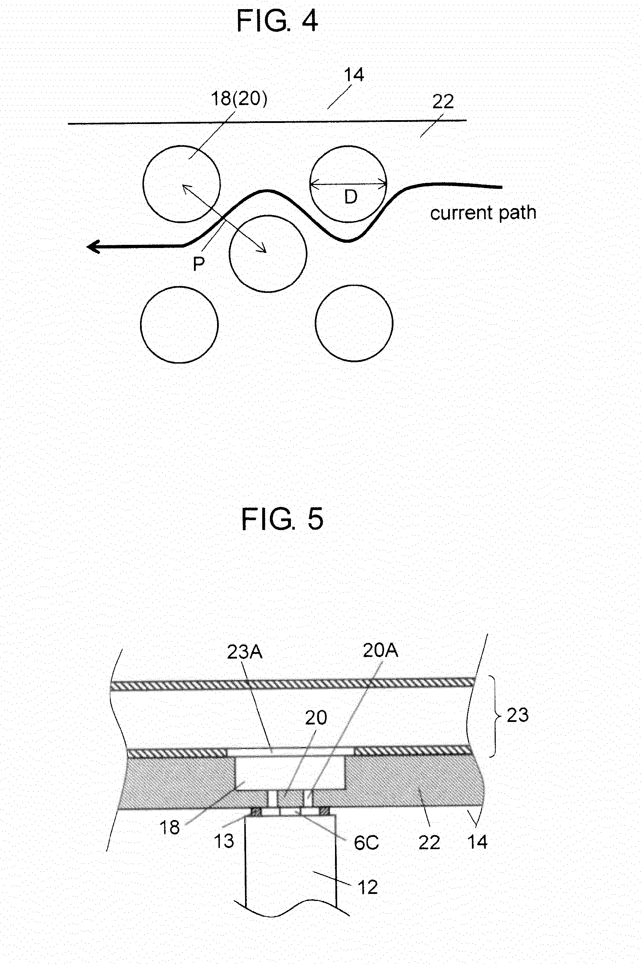

Next, a preferable arrangement of recesses 18 is described. Fig. 4 is a top view of the assembled battery shown in Fig. 2.

As shown in Figs. 2 and 3, connecting section 24 to be connected to an external terminal is provided in the vicinity of an end portion of the long side of positive electrode connecting member 14. Recesses 18 (thin portions 20) formed on positive electrode connecting member 14 are connected to unit batteries 12. Therefore, electric current flowing in positive electrode connecting member 14 passes through thick portion 22 in a path that avoids recesses 18.

Assuming that a center-to-center distance of neighboring recesses 18 as P, and a diameter of recess 18 as D, P-D denotes a width of the current path. From the viewpoint of maintaining the resistance of positive electrode connecting member 14 small, the value of P-D is preferably 5.0 mm or more when the thickness of thick portion 22 is 1.0 mm, and the value of P-D is preferably 2.0 mm or more when the thickness of thick portion 22 is 2.5 mm.

However, the increase in the value of P-D means the increase in the size of assembled battery 10. Therefore, in order to increase a sectional area of the electric current path represented by a product of the thickness of thick portion 22 and the value of P-D and to reduce the size of assembled battery 10, thick portion 22 is preferably as thick as possible. However, when thick portion 22 is too thick, thin portions 20 are not easily formed, and thin portions 20 cannot be arranged with high accuracy. Furthermore, when the maximum current is taken into account, even if the thickness of thick portion 22 is a predetermined thickness or more, contribution to reduction of resistance is reduced. When such things are taken into account, it is more preferable that positive electrode connecting member 14 is designed such that the relation expressed by Formula 1 is satisfied where the thickness of thick portion 22 is denoted by T mm, the value of P-D is denoted by W, and the maximum current is denoted by I. Furthermore, the same is true to negative electrode connecting member 16.

Note here that n denotes the number of recesses 18 (the number of unit batteries 12) in positive electrode connecting member 14; $\rho$, c, and $\gamma$ denote specific resistance, specific heat, and specific gravity of material constituting positive electrode connecting member 14, respectively; t denotes time during which a maximum current flows; and $\Delta T$ denotes a permissible value of temperature increase.

$$(T \times W)^2 \square \frac{(I/n \times (n-3)/4)^2 \times \rho \times t}{c \times \gamma \times 1000 \times \Delta T} \qquad \text{(Formula 1)}$$

The threshold value can be guided from the following presupposition. Firstly, a largest amount of electric current in the electric current flowing between recesses 18 is electric current i that flows between recesses 18 that are nearest to connecting section 24. The electric current of three unit batteries 12 that are nearest to connecting section 24 does not flow between recesses 18. Since electric current flows in four portions including two portions of recesses 18 that are nearest to connecting section 24 and two portions in the outside, electric current i flowing between recesses 18 that are nearest to connecting section 24 is expressed by the following Formula 2 with respect to entire electric current I output from assembled battery 10.

$$i = I/n \times (n-3) / 4 \quad \text{(Formula 2)}$$

On the other hand, since temperature raise based on heat generation by electric current i is required to be not more than the permissible value of the temperature raise of positive electrode connecting member 14, Formula 3 is required to be satisfied. Note here that C denotes heat capacity in a portion between recesses 18 in positive electrode connecting member 14.

$$C \times \Delta T \geq i^2 \times R \times t \qquad \text{(Formula 3)}$$

Therefore, when L denotes a length in a direction in which electric current in positive electrode connecting member 14 flows, and Formula 2 is substituted, the following relation is obtained.

$$c \times \gamma \times 1000 \times T \times W \times L \times \Delta T \geq (I/n \times (n-3)/4)^2 \times \rho \times L/(T \times W) \times t \qquad \text{(Formula 4)}$$

By summarizing Formula 4, Formula 1 is obtained. In the conditions in which, for example, positive electrode connecting member 14 is made of copper, n denotes 14, I denotes 100 A, t denotes 270 seconds, and $\Delta T$ is 20°C, $T \times W$ is preferably 5.2 mm$^2$ or more. That is to say, it is preferable that a sectional area of a portion between recesses 18 in positive electrode connecting member 14 and negative electrode connecting member 16 is preferably 5.2 mm$^2$ or more.

Note here that when areas in which unit battery 12 and thin portions 20 and 28 are connected to each other are increased, connection resistances between unit battery 12 and positive electrode connecting member 14 and between unit battery 12 and negative electrode connecting member 16 can be reduced. Therefore, it is preferable that an area of thin portion 20 is equal to or larger than an area of a connecting surface of positive electrode terminal 6C, an area of thin portion 28 is preferably not smaller than an area of a connecting surface of negative electrode terminal 5A. Then, it is preferable that laser welding is carried out in as large area as possible of the connecting surfaces of thin portion 20 and positive electrode terminal 6C. For example, it is preferable that laser welding is carried out along the outer periphery of the connecting surface of positive electrode terminal 6C. Alternatively, it is preferable that laser welding is carried out in three or more points. The same is true to the welding with respect to the connecting surface between thin portion 28 and negative electrode terminal 5A.

Next, a preferable structure according to this exemplary embodiment is described with reference to Fig. 5. Fig. 5 is an enlarged view of a principal part of another assembled battery in accordance with the first exemplary embodiment of the present invention.

As shown in Fig. 1, positive electrode terminal 6C is provided with exhaust hole 6D for exhausting gas and the like from unit battery 12 when abnormality occurs in unit battery 12. Therefore, in order to guide the gas to the outside of assembled battery 10, it is preferable that duct 23 is disposed in positive electrode connecting member 14.

In this case, ring 13 is disposed outside of positive electrode terminal 6C of unit battery 12, and thus positive electrode terminal 6C is sealed by ring 13 and the lower surface of thin portion 20. Then, thin portion 20 is provided with through-hole(s) 20A. Furthermore, duct 23 is provided with through-holes 23A positioned to respective thin portions 20. With this configuration, gas emitted from positive electrode terminal 6C passes through through-hole 20A, recess 18, and through-hole 23A, then is guided into duct 23, and flows to the outside of assembled battery 10.

In Fig. 5, thin portion 20 is provided with through-hole 20A, but the size of thin portion 20 is made to be the same as that of the upper surface of positive electrode terminal 6C, and through-hole 20A may be formed on thick portion 22 in a position outside of thin portion 20.

(SECOND EXEMPLARY EMBODIMENT)

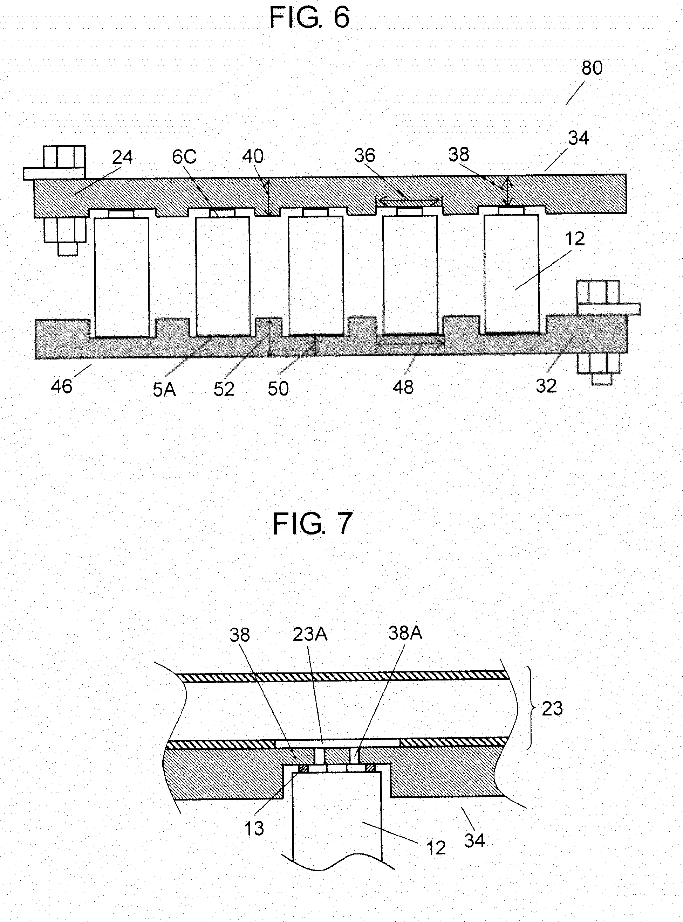

Fig. 6 is a sectional view of assembled battery 80 in accordance with a second exemplary embodiment of the present invention. Assembled battery 80 includes positive electrode connecting member 34 and negative electrode connecting member 46 instead of positive electrode connecting member 14 and negative electrode connecting member 16 of the first exemplary embodiment. A plurality of recesses 36 are formed on a surface of a side of positive electrode connecting member 34 to which unit batteries 12 are connected, and positive electrode connecting member 34 is provided with thin portions 38 and thick portion 40. Similarly, a plurality of recesses 48 are formed on a surface of a side of negative electrode connecting member 46 to which batteries 12 are connected, and negative electrode connecting member 46 includes thin portions 50 and thick portion 52.

Recesses 36 of positive electrode connecting member 34 are formed by subjecting a flat-shaped good conductor to press processing, cutting processing or etching, similar to recesses 18 in the first exemplary embodiment. Recesses 36 are provided in the number that is the same as the number of unit batteries 12 to be disposed in assembled battery 10 (the number is 14 in this exemplary embodiment). The thickness of each thin portion 38 is set such that positive electrode terminal 6C can be welded to thin portion 38 by laser welding or resistance welding.

Each recess 36 is formed in a circular shape that is slightly larger than respective positive electrode terminal 6C, and positive electrode terminal 6C is inserted into recess 36. When positive electrode terminal 6C and thin portion 38 are welded to each other by laser welding or resistance welding in a state in which positive electrode terminal 6C is inserted into recess 36 in this way, both are electrically connected to each other. Furthermore, unit battery 12 may be inserted into recess 36 by making the size of recess 36 be larger than a size of unit battery 12 in the diameter direction.

Recesses 48 of negative electrode connecting member 46 are formed by subjecting a flat-shaped good conductor to press processing, cutting processing or etching, similar to recess 26 in the first exemplary embodiment. Recesses 36 are provided in the number that is the same as the number of unit batteries 12 to be disposed in assembled battery 10. The thickness of thin portion 50 is set such that negative electrode terminal 5A can be welded to thin portion 50 by laser welding or resistance welding.

Recess 48 is formed in a circular shape that is slightly larger than that of negative electrode terminal 5A, and negative electrode terminal 5A is inserted into recess 48. When negative electrode terminal 5A and thin portion 50 are welded to each other by laser welding or resistance welding in a state in which negative electrode terminal 5A is inserted into recess 48 in this way, negative electrode terminal 5A and thin portion 50 are electrically connected to each other.

The thicknesses of thin portions 38 and 50, the thicknesses of thick portions 40 and 52, the interval between recesses 36, the interval between recesses 48 are set to the same as the thicknesses of thin portions 20 and 28, the thicknesses of thick portions 22 and 30, the interval between recesses 18, and the interval between recesses 26 in the first exemplary embodiment.

Hereinafter, an operation and effect of assembled battery 80 configured as mentioned above are described. In assembled battery 80, positive electrode terminals 6C are housed in respective recesses 36, and negative electrode terminals 5A are housed in respective recesses 48. Therefore, the height of assembled battery 80 can be reduced by a depth portion of recesses 36 and 48. As a result, energy efficiency per unit volume of assembled battery 80 can be improved.

Furthermore, even when unit battery 12 may be dislocated with respect to positive electrode connecting member 34 or negative electrode connecting member 46, the wall surfaces of recesses 36 and 48 restrict the movement of unit battery 12. Therefore, it is possible to prevent unit batteries 12 from being dislocated with respect to positive electrode connecting member 34 and negative electrode connecting member 46.

Note here that reduction of resistance of positive electrode connecting member 34 and negative electrode connecting member 46 due to thick portions 40 and 52, and securing of bond strength of thin portions 38 and 50 are the same as those in the first exemplary embodiment.

A more preferable structure is described with reference to Fig. 7. Fig. 7 is an enlarged view of a principal part of another assembled battery in accordance with the second exemplary embodiment of the present invention.

As described with reference to Fig. 5 in the first exemplary embodiment, in order to guide gas emitted from exhaust hole 6D to the outside of assembled battery 80, duct 23 is preferably disposed in positive electrode connecting member 34.

In this case, ring 13 is disposed at the outer side of positive electrode terminal 6C of unit battery 12, and positive electrode terminal 6C is sealed by ring 13 and the lower surface of thin portion 38. Then, thin portion 38 is provided with through-hole(s) 38A. Furthermore, duct 23 is provided with through-holes 23A that are positioned to respective thin portions 38. With this configuration, the gas emitted from positive electrode terminal 6C passes through through-holes 38A and 23A, then is guided into duct 23, and further is exhausted to the outside of assembled battery 80.

In this case, a route in which the gas is emitted is shorter than that in the configuration shown in Fig. 5 only by a depth of the recess, and thus the gas can be exhausted more smoothly.

When a vent mechanism is provided at negative electrode terminal 5A, duct 23 may be disposed under negative electrode connecting member 46. The same is true to the first exemplary embodiment.

(THIRD EXEMPLARY EMBODIMENT)

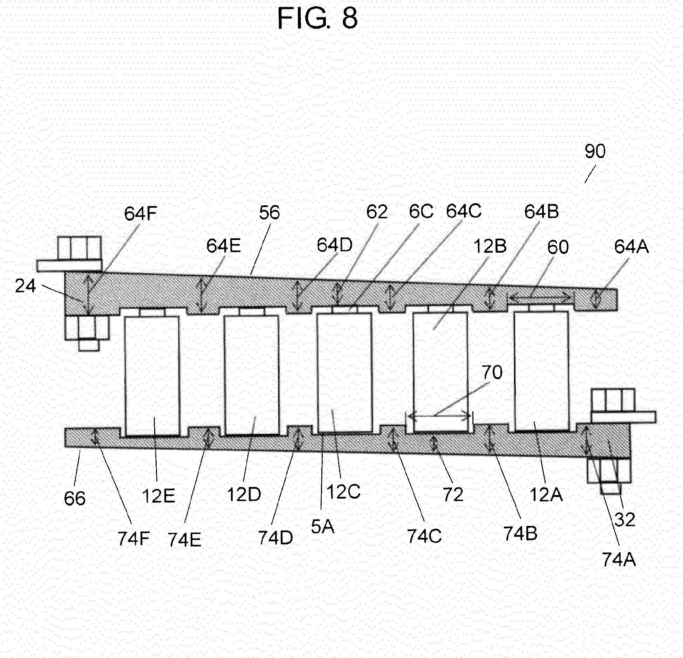

Fig. 8 is a sectional view of assembled battery 90 in accordance with a third exemplary embodiment of the present invention. In assembled battery 90, positive electrode connecting member 56 and negative electrode connecting member 66 are used instead of positive electrode connecting member 34 and negative electrode connecting member 46 in the second exemplary embodiment. A thick portion of positive electrode connecting member 56 is formed so as to be thicker as nearer to connecting section 24 to be coupled with an external terminal (not shown). Similarly, a thick portion of negative electrode connecting member 66 is also formed so as to be thicker as nearer to connecting section 32 to be coupled with an external terminal (not shown).

That is to say, a plurality of recesses 60 are formed on a surface of a side of positive electrode connecting member 56 to which unit batteries 12A to 12E are connected, and positive electrode connecting member 56 has thin portions 62 and thick portion 64A to 64F. Recess 60 is formed in a circular shape that is slightly larger than positive electrode terminal 6C, and positive electrode terminal 6C is inserted into recess 60. Furthermore, the thickness of thin portion 62 is set such that positive electrode terminal 6C can be welded to thin portion 62 by laser welding or resistance welding. Positive electrode terminals 6C of unit batteries 12A to 12E are inserted into respective recesses 60, and positive electrode terminals 6C and respective thin portions 62 are welded to each other by laser welding or resistance welding and connected to each other, respectively.

Herein, unit batteries 12A, 12B, 12C, 12D, and 12E are disposed in this order from a place that is distant from connecting section 24, and thick portions 64A, 64B, 64C, 64D, 64E, and 64F are disposed in this order from a place that is distant from connecting section 24.

Electric current flows from positive electrode terminals 6C of batteries 12A, 12B, 12C, 12D, and 12E toward connecting section 24 in positive electrode connecting member 56. Therefore, electric current flowing in thick portion 64B is larger than electric current flowing in thick portion 64A with electric current flowing in positive electrode terminal 6C of battery 12A. Furthermore, electric current flowing in thick portion 64C is larger than electric current flowing in thick portion 64B with electric current flowing from battery 12B. Similarly, electric current flowing in thick portion 64D is larger than electric current flowing in thick portion 64C with electric current flowing from battery 12C. In this way, the electric current flowing in positive electrode connecting member 56 is increased nearer to connecting section 24, and the electric current becomes maximum in thick portion 64F.

Similar to positive electrode connecting member 56, a plurality of recesses 70 are formed on a surface of a side of negative electrode connecting member 66 to which batteries 12A to 12E are connected, and negative electrode connecting member 66 has thin portions 72 and thick portions 74A and 74F. Recess 70 is formed in a circular shape that is slightly larger than negative electrode terminal 5A, and negative electrode terminals 5A are inserted into respective recesses 70. Furthermore, the thickness of thin portion 72 is set such that negative electrode terminal 5A can be welded to thin portion 72 by laser welding or resistance welding. Negative electrode terminals 5A of unit batteries 12A to 12E are inserted into respective recesses 70, and negative electrode terminals 5A and respective thin portions 72 are welded to each other by laser welding or resistance welding and they are connected to each other.

Herein, batteries 12A, 12B, 12C, 12D, and 12E are disposed in this order from a place that is distant from connecting section 32, and thick portions 74A, 74B, 74C, 74D, 74E, and 74F are disposed in this order from a place that is distant from connecting section 32.

Electric current flowing from the external terminal flows from connecting section 32 to negative electrode terminals of batteries 12A, 12B, 12C, 12D, and 12E in negative electrode connection member 66. Herein, since electric current flows into negative electrode terminal 5A of battery 12, electric current flowing in thick portion 74A is smaller than electric current flowing in thick portion 74B. Furthermore, since electric current flows into battery 12B, electric current flowing in thick portion 74C is smaller than electric current flowing in thick portion 74B. Similarly, electric current flowing in thick portion 74D is smaller than electric current flowing in thick portion 74C with electric current flowing to battery 12C. In this way, the electric current flowing in negative electrode connecting member 66 is increased nearer to connecting section 32, and it is maximum at thick portion 74A.

In this exemplary embodiment, the thickness of one end surface of positive electrode connecting member 56 that is near to connecting section 24 is made to be 0.5 mm to 2.5 mm, and the thickness of the other end surface of positive electrode connecting member 56 that is distant from connecting section 24 is made to be 0.1 mm to 0.3 mm. Similarly, the thickness of one end surface of negative electrode connecting member 66 that is near to connecting section 32 is made to be 0.5 mm to 2.5 mm, and the thickness of the other end surface of negative electrode connecting member 66 that is distant from connecting section 32 is made to be 0.1 mm to 0.3 mm.

An operation and effect of assembled battery 90 having the above-mentioned configuration are described. As mentioned above, both in positive electrode connecting member 56 and negative electrode connecting member 66, the electric current value is larger nearer to connecting sections 24 and 32, respectively. However, in positive electrode connecting member 56 and negative electrode connecting member 66, the thick portion is thicker and a sectional area is larger nearer to connecting sections 24 and 32. Therefore, it is possible to suppress electrical resistance of positive electrode connecting member 56 and negative electrode connecting member 66, and it is possible to suppress voltage drop even in the vicinity of connecting sections 24 and 32 on which electric current is concentrated. As a result, it is possible to increase an output of assembled battery 90, and to improve the lifetime of unit batteries 12A to 12E by reducing heat generation in positive electrode connecting member 34 and negative electrode connecting member 46.

Furthermore, as a distance from connecting sections 24 and 32 becomes larger, a value of the electric current flowing in positive electrode connecting member 56 and negative electrode connecting member 66 becomes smaller, and affect by heat generation due to electrification is reduced. Therefore, the thick portions of positive electrode connecting member 56 and negative electrode connecting member 66 can be thinned as the distance from connecting sections 24 and 32 is larger. The weight of positive electrode connecting member 56 and negative electrode connecting member 66 can be thus reduced, and the cost can be reduced.

Furthermore, similar to the second exemplary embodiment, positive electrode terminal 6C and positive electrode connecting member 56, as well as negative electrode terminal 5A and negative electrode connecting member 66 can be welded to each other by laser welding or resistance welding, respectively. As a result, sufficient bond strength can be secured. In addition, the size of assembled battery 90 can be reduced, and energy efficiency per unit volume of assembled battery 90 can be improved. Furthermore, dislocation of unit batteries 12A to 12E with respect to positive electrode connecting member 56 and negative electrode connecting member 66 can be prevented.

In the first to third exemplary embodiments, the thin portion and the thick portion are provided in both positive electrode connecting members 14, 34, and 56, and negative electrode connecting members 16, 46, and 66, but the present invention is not necessarily limited to this configuration. A connecting member including thin portions and a thick portion may be used in any one of the positive electrode connecting member and the negative electrode connecting member.

For example, a connecting member having thin portions and a thick portion only in a negative electrode connecting member is used while a positive electrode connecting member which is not provided with a thin portion is used, and the positive electrode connecting member and each of positive electrode terminals 6C may be connected to each other via a fuse.

Furthermore, in the exemplary embodiments, the shape of each of thin portions 20, 28, 38, 50, 62, and 72 are made to be circular, but the shape is not limited to this. The shape is not limited as long as the shape has a size in which laser welding and resistance welding can be carried out.

Furthermore, in the first to third exemplary embodiments, connecting sections 24 and 32 to be connected to other external terminals are provided in a vicinity of the end portion of the longitudinal side of each of positive electrode connecting members 14, 34 and 56, and a vicinity of the end portion of the longitudinal side of each of negative electrode connecting members 16, 46 and 66, but the present invention is not limited to this configuration. A connecting section to be connected to other external terminals may be provided in a vicinity of the end portion of the lateral side of each of positive electrode connecting members 14, 34 and 56, and a vicinity of the end portion of the lateral side of each of negative electrode connecting members 16, 46, and 66,

In the above description, an example in which a lithium ion secondary battery is used as unit battery 12 is described, but unit battery 12 is not limited to this alone. Aqueous-solution-based electrolyte secondary batteries such as a nickel hydrogen storage battery and other non-aqueous electrolyte secondary batteries may be used. However, since the nickel hydrogen storage battery has a peak voltage in voltage vs. charge depth characteristics and does not have a maximum voltage in a full-charged state, it needs to be used in the charge depth or less of the peak voltage. Furthermore, unit battery 12 may be primary batteries such as an alkaline dry battery and a lithium primary battery.

In the above description, an example in which a cylindrical battery is used as unit battery 12 is described. However, unit battery 12 is not limited to this, and a rectangular battery, a pouch-sealed battery, or the like, may be used.

## INDUSTRIAL APPLICABILITY

In an assembled battery according to the present invention, large electric power can be taken out, and decrease of the lifetime of unit batteries can be reduced, and bond strength at the time when unit batteries and a connecting member are welded to each other can be obtained sufficiently. Thus, the present invention is suitable as an assembled battery as a secondary battery in which excellent cycle property is required as various power sources.

### REFERENCE MARKS IN THE DRAWINGS

| | |
|---|---|
| 1 | positive electrode |
| 1A, 8A | current collector |
| 1B | positive electrode layer |
| 1C, 8C | lead |
| 2 | separator |
| 4 | electrode group |
| 5 | case |
| 5A | negative electrode terminal |
| 6A | sealing plate |
| 6B | gasket |
| 6C | positive electrode terminal |
| 6D | exhaust hole |
| 6E | vent mechanism |
| 6F | current breaking member |
| 7A, 7B | insulating plate |
| 8 | negative electrode |
| 8B | negative electrode layer |
| 10, 80, 90 | assembled battery |

(continued)

| | |
|---|---|
| 12, 12A, 12B, 12C, 12D, 12E | unit battery |
| 13 | ring |
| 14, 34, 56 | positive electrode connecting member |
| 16, 46, 66 | negative electrode connecting member |
| 18, 26, 36, 48, 60, 70 | recess |
| 20, 28, 38, 50, 62, 72 | thin portion |
| 20A, 23A, 38A | through-hole |
| 22, 30, 40, 52, 64A, 64B, 64C, 64D, 64E,64F, 74A, 74B, 74C, 74D, 74E,74F | thick portion |
| 24, 32 | connecting section |

**Claims**

1. An assembled battery comprising:

   a plurality of batteries each including a negative electrode terminal and a positive electrode terminal; and
   a connecting member having a plurality of thin portions and a thick portion that is a rest of the connecting member other than the thin portions,
   wherein each of the thin portions is welded to each of the positive electrode terminals or each of the negative electrode terminals,
   in a case that the connecting member is connected to each of the positive electrode terminals of the plurality of batteries, an area of each of the plurality of thin portions is equal to or more than an area of a connecting surface of each of the positive electrode terminals, and
   in a case that the connecting member is connected to each of the negative electrode terminals of the plurality of batteries, an area of each of the plurality of thin portions is equal to or more than an area of a connecting surface of each of the negative electrode terminals.

2. The assembled battery according to claim 1,
   wherein the thin portions are formed by providing recesses on a surface of an opposite side to a side of the connecting member to which the batteries are connected.

3. The assembled battery according to claim 1,
   wherein the thin portions are formed by providing recesses on a surface of a side of the connecting member to which the batteries are connected, and the batteries are disposed in the respective recesses.

4. The assembled battery according to claim 1,
   wherein the connecting member further has a connecting section connected to an external terminal, and the thick portion is thicker as nearer to the connecting section.

5. The assembled battery according to claim 1,
   wherein the positive electrode connecting member and the negative electrode connecting member satisfy a following Formula 1:

$$(T \times W)^2 \geq \frac{(I/n \times (n-3)/4)^2 \times \rho \times t}{c \times \gamma \times 1000 \times \Delta T} \qquad \text{(Formula 1)}$$

   where "T" denotes a thickness of a portion between the recesses; "W" is a value obtained by subtracting a diameter of each of the recesses from a center-to-center distance of the recesses; "I" denotes a maximum current flowing in the positive electrode connecting member and the negative electrode connecting member; n denotes a number of the plurality of batteries; "$\rho$, c, and $\gamma$" denote specific resistance, specific heat, and specific gravity of material constituting the positive electrode connecting member and the negative electrode connecting member; "t" denotes a time during which the maximum current flows; and "$\Delta T$" denotes a permissible value of a temperature increase.

6. The assembled battery according to claim 1,

wherein the positive electrode connecting member and the negative electrode connecting member are made of copper, and a sectional area thereof other than the recesses is 5.2 mm$^2$ or more.

# FIG. 1

# FIG. 2

# FIG. 3

# FIG. 4

14

18(20)    22

D

current path

P

# FIG. 5

23A    20A

20

23

18    6C    22    14

13    12

# FIG. 6

# FIG. 7

# FIG. 8

<table>
<tr><td colspan="2">**INTERNATIONAL SEARCH REPORT**</td><td>International application No.<br>PCT/JP2011/004486</td></tr>
</table>

| A. CLASSIFICATION OF SUBJECT MATTER |
|---|
| $H01M2/20$(2006.01)i, $H01M2/10$(2006.01)i |

According to International Patent Classification (IPC) or to both national classification and IPC

| B. FIELDS SEARCHED |
|---|

Minimum documentation searched (classification system followed by classification symbols)
H01M2/20, H01M2/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2004-265610 A (Sony Corp.),<br>24 September 2004 (24.09.2004),<br>claims; paragraphs [0027] to [0039]; fig. 3 to 5<br>& JP 2004-265610 A  & US 2006/0032667 A1<br>& WO 2004/066446 A1  & TW 237918 B<br>& KR 10-2005-0099505 A  & CN 1757138 A | 1-3,5,6<br>4 |
| X<br>A | JP 2009-80963 A (GS Yuasa Corp.),<br>16 April 2009 (16.04.2009),<br>paragraph [0018]; fig. 6 to 8<br>(Family: none) | 1,3<br>2,4-6 |
| A | JP 2005-93156 A (Honda Motor Co., Ltd.),<br>07 April 2005 (07.04.2005),<br>full specifications<br>& US 2005/0070164 A1 | 1-6 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 October, 2011 (07.10.11) | Date of mailing of the international search report<br>18 October, 2011 (18.10.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/004486

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-317368 A  (Sanyo Electric Co., Ltd.),<br>10 November 2005 (10.11.2005),<br>full specifications<br>(Family: none) | 1-6 |
| A | JP 2001-126704 A  (GS Melcotec Co., Ltd.),<br>11 May 2001 (11.05.2001),<br>full specifications<br>& JP 2002-63878 A       & EP 1077497 A1<br>& CN 1284755 A | 1-6 |
| A | Microfilm of the specification and drawings<br>annexed to the request of Japanese Utility<br>Model Application No. 129591/1974(Laid-open<br>No. 55830/1976)<br>(Japan Storage Battery Co., Ltd.),<br>30 April 1976 (30.04.1976),<br>full specifications<br>(Family: none) | 1-6 |

Form PCT/ISA/210 (continuation of second sheet) (July 2009)

| **INTERNATIONAL SEARCH REPORT** | International application No. |
|---|---|
| | PCT/JP2011/004486 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The documents 1 and 2 respectively disclose assembled cells having a configuration similar to that set forth in claim 1.
    Consequently, the invention in claim 1 does not have a special technical feature in the light of the disclosures in the documents 1 and 2, and therefore, it is obvious that the invention in claim 1 and the inventions in claims 2-6 do not comply with unity.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2004031192 A